Europäisches Patentamt

European Patent Office

Office européen des brevets

(19)

(11) Numéro de publication: **0 230 846 B1**

# FASCICULE DE BREVET EUROPEEN

(12)

(45) Date de publication de fascicule du brevet:
**13.11.91**

(51) Int. Cl.⁵: **A61C 1/07**, F16H 25/16

(21) Numéro de dépôt: **86450025.1**

(22) Date de dépôt: **02.12.86**

(54) **Tête de contre-angle pour instrument endodontique destinée à porter un outil de perforation , de limage et autre.**

(30) Priorité: **18.12.85 FR 8518904**

(43) Date de publication de la demande:
**05.08.87 Bulletin 87/32**

(45) Mention de la délivrance du brevet:
**13.11.91 Bulletin 91/46**

(84) Etats contractants désignés:
**AT BE CH DE ES FR GB GR IT LI LU NL SE**

(56) Documents cités:
**DE-A- 2 328 352          FR-A- 2 555 888
GB-A- 761 910            US-A- 1 631 444
US-A- 2 135 933          US-A- 4 371 341**

(73) Titulaire: **Granier, Daniel
Quartier Petite 11e
F-30150 Roquemaure(FR)**

(72) Inventeur: **Granier, Daniel
Quartier Petite 11e
F-30150 Roquemaure(FR)**

## Description

La présente invention est du domaine des matériels utilisés en endodontie et a pour objet une tête de contre angle destinée à porter un outil de perforation, de limage et autre.

Dans le cadre des phases préparatoires de conditionnement des canaux dentaires en vue de leur obturation par vòie médicamenteuse, l'homme de l'art procède en premier lieu à des opérations d'alésage.

Pour réaliser de telles opérations, on a proposé antérieurement divers instruments comprenant notamment une tête de contre-angle équipée d'une pince porte-outil et de moyens pour communiquer à la pince porte-outil et donc à l'outil qu'elle porte un mouvement de va et vient à partir d'un mouvement continu, moteur.

Les têtes de contre-angle de la technique antérieure comprennent un corps cylindrique pourvu d'un alésage axial dans lequel est monté en glissement le coulisseau de la pince porte-outil et comprennent également un corps tubulaire dans lequel est monté un arbre rotatif terminé par un excentrique qui coopère en entrainement avec le coulisseau de la pince.

Cet excentrique est généralement constitué par un pion qui s'étend vers le coulisseau de la pince de manière parallèle à l'axe longitudinal de l'arbre rotatif et qui s'engage dans une saignée ménagée dans le coulisseau de la pince.

On connait du brevet GB 295.550 un instrument du type sus-évoqué. Selon ce brevet, le pion s'engage dans une saignée cylindrique du coulisseau et la pince est animée, par rapport à son axe longitudinal, de deux mouvements alternatifs combinés, à savoir :

- un mouvement alternatif de translation le long de l'axe,
- et un mouvement alternatif de rotation par rapport à l'axe.

On connaît également, de la demande de brevet européen n° 064.871, un instrument du type précité dont le pion excentré s'engage dans une saignée constituée par une rainure s'étendant parallèlement à l'axe longitudinal du coulisseau.

De ce fait, le coulisseau, la pince et l'outil sont animés d'un mouvement alternatif de rotation par rapport à l'axe longitudinal du coulisseau.

On connaît également, du brevet EP 0.161.196, un instrument dont le pion excentré s'engage dans une saignée constituée par une rainure du coulisseau pratiquée suivant un plan perpendiculaire à l'axe longitudinal, de façon à ce que la pince et l'outil soient animés simultanément d'un mouvement alternatif de translation axiale.

Dans cet appareil, il n'est prévu aucun moyen d'entraînement en rotation alternative, de l'instrument, à l'exception de ceux provoqués par la résistance des parois du canal traîté, sur les spires de l'instrument, ni aucun moyen de désaccouplement automatique du support de l'instrument, en cas de résistance excessive rencontrée par l'instrument.

De plus, les instruments de l'art antérieur ne sont pas équipés de moyens permettant d'obtenir l'interruption automatique du mouvement de l'outil lorsque les efforts appliqués à ce dernier sont trop importants.

La présente invention a pour objet de pallier les inconvénients précédemment énoncés en mettant en oeuvre une nouvelle tête de contre-angle avec laquelle l'outil peut être animé au choix de l'utilisateur, d'un mouvement alternatif de translation axiale, d'un mouvement de rotation oscillatoire et d'un mouvement résultant de la combinaison des deux précédents.

Un autre but de l'invention est la mise en oeuvre d'une tête de contre-angle pourvue de moyens permettant l'interruption du mouvement de l'outil si les efforts exercés sur ce dernier sont trop importants.

A cet effet, la tête de contre-angle selon l'invention, pour instrument endodontique, comporte un corps dans lequel est ménagé un alésage débouchant extérieurement dans lequel est monté en glissement un coulisseau porte pince de forme cylindrique qui est doté d'au moins un évidement périphérique ou saignée dans lequel s'engage un maneton porté de manière excentrée en extrémité d'un arbre monté en rotation dans un logement cylindrique radial à l'alésage et débouchant dans ce dernier.

Extérieurement au logement, l'autre extrémité de l'arbre porte une série de griffes qui coopère en engrènement avec un moyen moteur connu.

La tête telle que précédemment définie, se caractérise essentiellement en ce qu'elle est dotée d'un moyen de désaccouplement du coulisseau par recul du maneton.

Selon une autre caractéristique de l'invention, le coulisseau est doté de plusieurs évidements ou saignées régulièrement réparties sur la périphérie du coulisseau qui sont chacune sélectivement appelées à venir en regard du maneton par rotation du coulisseau et à recevoir le dit maneton.

Selon encore une autre caractéristique de la tête de contre angle, le mouvement de recul axial du maneton s'effectue à l'encontre de l'action de poussée d'un organe élastique calibré de façon à ce que le maneton et la saignée correspondante puissent être écartés l'un de l'autre que lorsque l'action axiale exercée par le coulisseau sur le maneton ait dépassé une valeur prédéterminée.

D'autres avantages et caractéristiques de l'invention apparaîtront à la lecture de la description d'une forme préférentielle de réalisation donnée à titre non limitatif en se referant aux dessins annexés en lesquels :

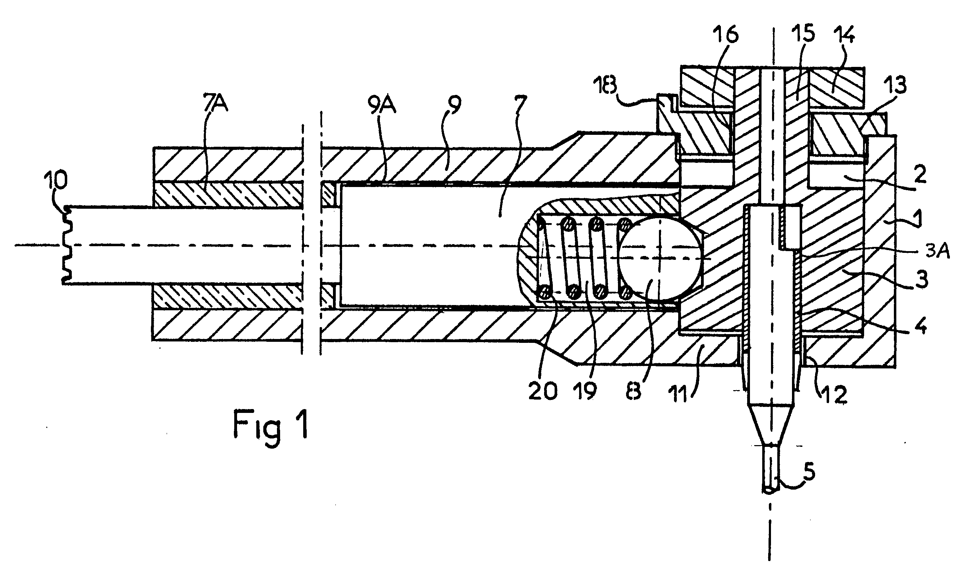

- la figure 1 est une vue en coupe longitudinale de la tête selon l'invention,

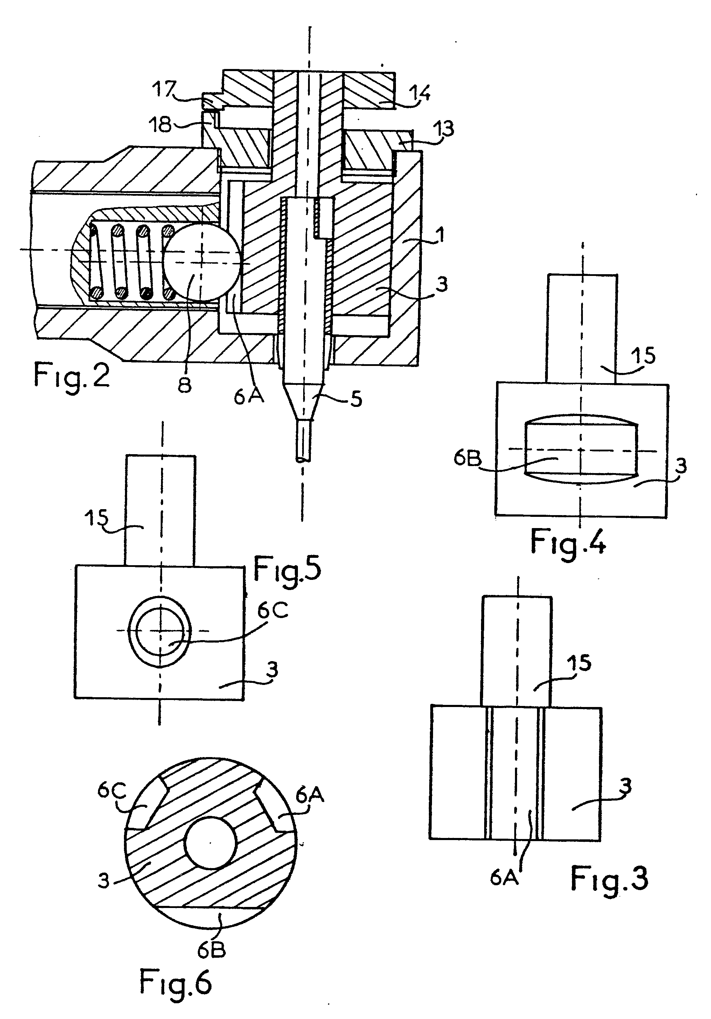

- la figure 2 est une vue en coupe illustrant le rôle des organes de butée axiale,
- les figures 3, 4 et 5 sont des vues en plan du coulisseau montrant chacune une des saignées,
- la figure 6 est une coupe transversale du coulisseau.

Telle que représentée, la tête de contre-angle selon l'invention pour instrument endodontique, ccmprend un corps 1 dans lequel est ménagé un alésage axial débouchant extérieurement, dans lequel est monté en glissement un coulisseau 3 de forme cylindrique équipé d'une pince 4 qui reçoit un outil endodontique 5.

Le coulisseau 3 comporte un logement périphérique ou saignée 6 pour s'accoupler à un arbre rotatif 7 par engagement dans la saignée d'un maneton 8 monté de manière excentrée en extrémité de l'arbre 7.

Cet arbre 7 est monté rotatif dans un logement cylindrique 9A débouchant radialement dans l'alésage 2 et ménagé dans une prolongation cylindrique 9 du corps 1.

Cette prolongation 9 s'étend radialement au corps 1.

Dans le logement cylindrique 9A de la prolongation 9 est disposé un palier 7A de guidage de l'arbre 7 en rotation.

Le palier est du type auto-lubrifié et est constitué de préférence en bronze phosphoreux.

Extérieurement au logement 9A, l'autre extrémité de l'arbre reçoit une série de griffes 10 destinée à coopérer en liaison avec la prise de mouvement d'un moyen moteur connu en soi.

Selon la forme préférée de réalisation, le corps 1 comporte un fond 11 qui se développe perpendiculairement à l'axe de l'alesage.

Ce fond, coaxialement à l'alésage, est percé de part en part d'un orifice cylindrique 12 qui constitue passage à la pince 4 qui est fixée par son corps dans un orifice cylindrique 3A pratiqué dans le coulisseau suivant l'axe de ce dernier.

L'alésage 2 est obturé par un couvercle 13.

Ce couvercle est doté à sa périphérie d'un pas de vis pour coopérer en fixation avec un taraudage pratiqué à l'embouchure de l'alésage 2.

La distance entre le fond 11 et le couvercle 13 est plus importante que la hauteur du coulisseau en sorte que le dit coulisseau puisse être déplacé axialement dans l'alesage 2.

Par la série de griffe 10, le moyen moteur communique à l'arbre 7 un mouvement continu de rotation.

Ce mouvement de rotation est transformé par le système maneton et saignée en au moins un mouvement alternatif qui est imprimé au coulisseau 3 à la pince 4 et à l'outil 5.

Conformément à l'invention, la tête de contre-angle est équipée d'un moyen de désaccouplement du coulisseau par recul axial du maneton.

Aussi, grâce à ce moyen, le maneton peut être dégagé de la saignée du coulisseau et ce dernier peut être manoeuvré librement.

Selon une autre caractéristique, le coulisseau est équipé de trois saignées de formes différentes 6A, 6B, 6C régulièrement réparties sur sa périphérie, destinées chacune à coopérer avec le maneton pour constituer avec ce dernier un système de transformation du mouvement circulaire.

Il est bien évident qu'en fonction des besoins, le coulisseau pourra être équipé d'une ou deux saignées ou pourra en recevoir quatre ou plus.

Afin d'amener sélectivement chacune des saignées en regard du maneton, ce positionnement s'effectuant par rotation du coulisseau, le dit coulisseau est équipé d'un bouton de manoeuvre 14. Ce bouton de manoeuvre 14 est fixé extérieurement au corps 1 sur une prolongation axiale 15 du coulisseau.

Cette prolongation axiale de diamètre inférieur à celui du coulisseau s'engage dans un orifice axial 16 du couvercle 13 et le traverse de part en part.

Le bouton de manoeuvre 14 est fixé à cette prolongation axiale par une vis et est maintenu écarté du couvercle 1.

Avantageusement, le bouton de manoeuvre comporte des gravures qui permettent de repérer la position des saignées.

La première saignée 6A est constituée par une rainure pratiquée suivant une génératrice de la surface cylindrique du coulisseau. Le premier système constitué par le maneton et cette première saignée transforme le mouvement circulaire continu de l'arbre 7 en un mouvement de rotation oscillatoire qui est imprimé au coulisseau à la pince et à l'outil, ce mouvement s'effectuant autour de l'axe du coulisseau.

Lorsque l'ensemble coulisseau, pince et outil est aminé du premier type de mouvement, il est souhaitable de limiter son déplacement axial.

A cette fin, il est prévu un premier organe de butée solidaire de l'ensemble coulisseau, pince et bouton de manoeuvre et un second organe de butée fixe par rapport au corps 1.

Ces deux organes de butée, lorsque l'ensemble coulisseau, pince et bouton est animé du premier type de mouvement coopèrent en appui et glissement l'un avec l'autre et limitent le mouvement axial de l'ensemble précité.

Selon une forme préférée de réalisation, le premier organe de butée est solidaire du bouton de manoeuvre 14 et est constitué par un bossage 17 s'étendant vers le corps 1 ou le couvercle 13. Le second organe de butée est constitué par une saillie 18 disposée sur le couvercle 13.

Lorsque la première saignée coopère en accouplement avec le maneton, le bossage du bouton de manoeuvre est positionné en vis à vis de la saillie 18 et coopère en contact avec cette dernière. Cette saillie de forme annulaire se développe suivant un arc de circonférence centré à l'axe longitudinal de l'alesage 2.

La valeur de cet arc de circonférence est égale à celle de l'arc de circonférence décrit par un point du coulisseau au cours du mouvement de rotation oscillatoire.

Lorsque le bossage 17 est disposé en contact avec la saillie 18, il demeure entre le coulisseau 3 et le couvercle 13 un jeu de quelques dizièmes de millimètre.

Le déplacement axial du coulisseau est donc limité dans ce cas à cette valeur.

Le bossage 17 ne coopère avec la saillie 18, pour limiter le mouvement de translation axiale du coulisseau, que dans le cadre de ce premier type de mouvement.

Ce mouvement de rotation oscillatoire est utilisé pour pénétrer et élargir les 2/3 supérieurs du canal dentaire.

La deuxième saignée 6B est constituée par une rainure qui se développe perpendiculairement aux génératrices de la surface cylindrique du coulisseau.

Cette deuxième saignée, lorsqu'elle coopère en accouplement avec le maneton constitue avec ce dernier un deuxième système de transformation du mouvement.

Ce deuxième système transforme le mouvement rotatif de l'arbre 7 en un mouvement alternatif de translation axiale et communique ce dernier mouvement à l'ensemble coulisseau 3, pince 4 et outil 5.

Ce deuxième mouvement assure le cathétérisme et la mise en forme du 1/3 apical du canal.

Il permet aussi à l'outil endodontique de franchir les courbures éventuelles existant dans ces canaux et de neutraliser certains accidents anatomiques.

La troisième saignée 6C est constituée par un orifice borgne radial au coulisseau 3.

Cet orifice est de préférence en tronc de cône.

Lorsque cette troisième saignée coopère en accouplement avec le maneton 8, le système de transformation ainsi constitué communique à l'ensemble maneton 3 pince 4 et outil 5, simultanément un mouvement de rotation oscillatoire et un mouvement alternatif de translation axiale.

Ce mouvement sous irrigation et à grande vitesse permet le débourrage, le nettoyage et la finition pariètale canalaire par l'ouverture des tubulis dentinaires.

Cette dernière action précède la séance d'obturation médicamenteuse du canal.

Il est possible aussi d'effectuer la condensation thermo-mécanique de substances médicamenteuses à usage endodontique par sélection du deuxième mouvement.

Il est également possible par sélection isolée du troisième mouvement d'effectuer la finition pariètale des canaux en vue de leur obturation après alésage manuel.

Comme dit précédemment, la tête de contre-angle est dotée d'un moyen de désaccouplement du coulisseau par recul ou éloignement du maneton.

De préférence, le mouvement de recul du maneton est un mouvement de translation qui s'effectue parallèlement à l'axe longitudinal de l'arbre 7 mais il est évident que ce mouvement pourra s'effectuer de manière oblique par rapport à cet axe.

Selon la forme préférée de réalisation, le moyen permettant le désaccouplement du coulisseau est constitué par un orifice 19, pratiqué en extrémité de l'arbre 7, dans lequel est monté en glissement le maneton 8.

Selon une première forme de réalisation, l'axe de cet orifice est parallèle à l'axe de l'arbre 7.

Selon une autre forme de réalisation, l'axe de cet orifice est oblique par rapport à l'axe de l'arbre 7, de façon à ce que le maneton puisse, sous l'effet de la composante axiale de la force centrifuge, venir en pression dans la saignée correspondante.

Dans l'orifice 19, est monté un organe élastique 20 de compression.

Le mouvement de recul de maneton s'effectue à l'encontre de l'action de poussée exercée par l'organe élastique 20 et résulte de l'action mécanique de la paroi de la saignée correspondante contre le maneton.

Pour déplacer le maneton, l'action mécanique ne doit pas être purement radiale à ce dernier mais doit présenter une composante axiale d'intensité suffisante pour vaincre, d'une part, les frottements et d'autre part, l'action de l'organe élastique 20.

A cette fin, chaque saignée s'évase vers l'extérieur du coulisseau de façon à ce que les faces destinées à coopérer en contact avec le maneton soient obliques par rapport à l'axe de déplacement de ce dernier, ce qui permet la création de la composante axiale.

Egalement, toujours pour créer cette composante axiale, les faces du maneton coopérant avec la saignée, sont obliques par rapport à l'axe du maneton.

Selon la forme préférée de réalisation, le contour de la section droite de chaque saignée est un trapèze, mais elle pourra être également un arc de circonférence.

Selon cette forme de réalisation, le maneton est constitué par une bille.

De préférence, l'organe élastique est un ressort à spire.

Avantageusement, ce ressort est calibré de façon à ce que le désaccouplement du coulisseau n'intervienne que lorsque l'intensité des efforts exercés sur ce dernier et/ou sur l'outil dépasse une valeur prédéterminée et induise une composante axiale favorable au dégagement de l'outil endodontique.

La saignée du coulisseau et le maneton sont désaccouplés l'une de l'autre lorsqu'un couple suffisant est exercé sur le bouton de manoeuvre 14 en vue de sélectionner un des trois mouvements dont peut être animé l'outil.

L'accouplement de la saignée sélectionnée et du maneton s'opère automatiquement sous l'effet de la poussée de l'organe élastique, dés que la dite saignée et le dit maneton sont en vis à vis l'une de l'autre.

On conçoit aisément que grâce aux caractéristiques techniques précédemment définies, la tête de contre-angle est d'un emploi plus large et plus fiable.

**Revendications**

1. Tête de contre-angle pour instrument endodontique comportant un corps (1) dans lequel est aménagé un alésage (2) obturé par un couvercle (13), dans lequel est monté coulissant un coulisseau cylindrique (3), muni d'une pince (4) porte-outil (5), qui est doté d'au moins une saignée (6) périphérique dans laquelle s'engage un maneton (8) porté de manière excentrée par un arbre (7) monté en rotation dans un logement cylindrique (9A) d'une prolongation radiale (9) du corps (1) et dans laquelle sont prévus des moyens de désaccouplement du coulisseau par recul du maneton, caractérisée en ce que le coulisseau comprend plusieurs saignées (6A, 6B, 6C) régulièrement réparties sur sa périphérie, qui sont destinées chacune à venir en regard du maneton par rotation du coulisseau et à coopérer chacune en accouplement avec ledit maneton, pour constituer avec ce dernier un système de transformation du mouvement rotatif de l'arbre (7) en un ou plusieurs mouvements alternatifs qui dépendent de la sélection de la saignée et en ce qu'aux moyens de désaccouplement du coulisseau sont associés des moyens élastiques (20) de maintien normal d'accouplement.

2. Tête de contre-angle, selon la revendication 1, caractérisée en ce que les moyens de désaccouplement du coulisseau, par recul du maneton, sont agencés pour que le désaccouplement soit réalisé automatiquement lorsque les efforts appliqués sur l'outil sont trop importants.

3. Tête de contre-angle pour instrument endodontique, selon la revendication 1, caractérisée en ce que le moyen pour désaccoupler le maneton comprend un orifice borgne (19) pratiqué en extrémité de l'arbre (7) dans lequel est monté en glissement le maneton (8).

4. Tête de contre-angle, selon la revendication 3, caractérisée en ce que l'axe de l'orifice (19) est parallèle à l'axe de l'arbre (7).

5. Tête de contre-angle, selon la revendication 3, caractérisée en ce que l'axe de l'orifice (19) est oblique par rapport à l'axe de l'arbre (7).

6. Tête de contre-angle, selon la revendication 3, caractérisée en ce que dans l'orifice borgne (19) est monté un organe élastique (20) à l'encontre de l'action duquel s'effectue le mouvement de recul du maneton (8).

7. Tête de contre-angle, selon la revendication 2, dont le coulisseau comporte trois saignées, caractérisée en ce que la première saignée (6A) est constituée par une rainure pratiquée dans le coulisseau suivant ses génératrices que la seconde (6B) est une rainure pratiquée dans le coulisseau perpendiculairement aux génératrices et que la troisième (6C) est constituée par un orifice borgne radial.

8. Tête de contre-angle, selon la revendication 1, caractérisée en ce que le maneton est constitué par une bille.

9. Tête de contre-angle, selon les revendications 1, 2 et 3, caractérisée en ce que les saignées sont évasées vers l'extérieur du coulisseau.

10. Tête de contre-angle, selon la revendication 9, caractérisée en ce que les saignées présentent une section droite trapézoïdale.

11. Tête de contre-angle, selon les revendications 1 et 2, caractérisée par un bouton de manoeuvre (14) du coulisseau extérieur au corps (1) fixé à une prolongation axiale (15) du coulisseau traversant de part en part le couvercle (13).

12. Tête de contre-angle, selon les revendications 1 et 2, caractérisée par deux organes de butée dont un, l'organe (17) est solidaire de l'ensemble coulisseau outil et bouton (14) et dont l'autre, l'organe (18) est fixé par rapport au corps (1), les dits organes venant se disposer en vis-à-vis par rotation du coulisseau et limiter le mouvement de translation axiale du coulisseau lorsque ce dernier est animé du mouvement de rotation oscillatoire.

13. Tête de contre-angle, selon la revendication 12, caractérisée en ce que le premier organe de butée est fixé au bouton de manoeuvre et s'étend en direction du couvercle et que le second organe de butée est en saillie sur le couvercle et se développe suivant un arc de circonférence dont la valeur est celle de l'arc de circonférence décrit par un point du coulisseau lorsque ce dernier est animé du mouvement de rotation oscillatoire.

**Claims**

1. Counter-angle head for endodontic instruments comprising a body (1) in which is provided a bore (2) closed by a cover(13), in which is slidably mounted a cylindrically shaped slide (3), equipped with a tool-carrier (5) in a clamp (4), provided with at least one peripheral recess or notch (6) in which a bearing (8) engages. The bearing (8) is mounted eccentrically in a shaft (7) rotatably mounted in a cylindrical housing (9A) disposed in a radial extension (9) of the body (1) and in which is provided the means of disengagement of the slide by withdrawal of the bearing. The slide has several recesses or notches (6A, 6B, 6C) regularly distributed about its periphery, each one of which, when the slide is suitably rotated, can be brought into a position where it engages with the bearing. The engagement of each notch with the bearing provides a system whereby the rotational movement of the shaft (7) is transformed into one or several reciprocating movements of the slide depending on the notch selected. The said means of disengagement of the slide depends on an elastic compression member (20) normally functioning to keep the bearing engaged with the notch.

2. Counter-angle head according to claim 1,wherein the means of disengagement of the slide, by withdrawal of the bearing, are arranged in such a way that the disengagement can be achieved automatically when the forces acting on the tool are too great.

3. Counter-angle head according to claim 1, wherein the means of retracting the bearing comprises a blind opening (19) in the end of the shaft (7) and in which the bearing (8) is slidably mounted.

4. Counter-angle head according to claim 3, wherein the axis of the blind opening (19) is parallel to the axis of the shaft (7).

5. Counter-angle head according to claim 3, wherein the axis of the blind opening (19) is oblique to the axis of the shaft (7).

6. Counter-angle head according to claim 3, wherein the said blind opening (19) contains an elastic compression member (20) which opposes the retracting movement of the bearing (8).

7. Counter-angle head according to claim 2, wherein the slide is provided with three notches, the first notch (6A) having the form of a slot extending parallel to the axis of the slide, the second (6B) having the form of a slot extending perpendicular to the axis of the slide and the third (6C) being a circular blind opening extending radially of the axis of the slide.

8. Counter-angle head according to claim 1, wherein the said bearing is a ball.

9. Counter-angle head according to claims 1, 2, and 3, wherein the notches are flared towards the exterior of the slide.

10. Counter-angle head according to claim 9, wherein the notches have a trapezoidal transverse section.

11. Counter-angle head according to claims 1 and 2, wherein the head is provided with an operating knob (14) for the slide, the said knob being exterior to the body (1) and being fixed to an axial extension (15) of the slide extending through the cover (13).

12. Counter-angle head according to claims 1 and 2, wherein two stops are provided, the first being a boss (17) which is integral with the assembly comprising the slide, tool and operating knob (14) and the second being fixed in relation to the body (1). The said stops come into conjunction by rotation of the slide and they limit the axial translatory movement of the slide when the slide is operating with oscillating rotary motion.

13. Counter-angle head according to claim 12, wherein the first of the said stops is intergral with the operating knob and extends in the direction of the cover and the second stop projects from the cover. The second stop is developed along a circular arc whose extent is equal to that of the circular arc described by a point on the slide in the course of its oscillating rotary motion.

## Patentansprüche

1. Winkelstück für Zahnbehandlungsgerät mit Körper (1), in dem sich eine durch eine Kappe (13) verschlossene Bohrung (2) befindet. In dieser Bohrung (2) gleitet ein zylindrischer Schieber (3), der den mit einer Zange (4) versehenen Werkzeughalter (5) trägt. Im Mantel des Schiebers (3) ist mindestens ein Einschnitt (6) eingearbeitet, in den ein Zapfen (8) eingreift, der exzentrisch auf einer Welle (7) befestigt ist, welche wiederum in einer zylindrischen, in einer radialen Verlängerung (9) des Körpers (1) gelegenen Führung (9A) dreht. Im Winkelstück sind Vorrichtungen für das Auskuppeln des Schiebers durch Rückziehen des Zapfens vorgesehen. Es zeichnet sich durch einen Schieber mit mehreren, regelmässig auf seinem Mantel verteilten Einschnitten (6A, 6B, 6C) aus, die durch Drehung des Schiebers jeweils gegenüber dem Zapfen zu liegen kommen und durch Kupplung an diesen Zapfen ein System bilden, in dem die Drehbewegung der Welle (7) in eine odere mehrere, von der Wahl des jeweiligen Einschnitts abhängende Umkehrbewegungen umgesetzt wird. Zusammen mit den Vorrichtungen für das Auskuppeln des Schiebers sind elastische Mittel (20) zur Beibehaltung der normalen kupplung vorhanden.

2. Winkelstück gemäss Anforderung 1, das sich dadurch auszeichnet, dass die Vorrichtungen zum Auskuppeln des Schiebers so angefertigt sind, dass dieser automatisch auskuppelt, wenn das Werkzeug zu stark beansprucht wird.

3. Winkelstück für Zahnbehandlungsgerät, gemäss Anforderung 1, das sich dadurch auszeichnet, dass die Vorrichtung zum Auskuppeln des Zapfens aus einer nicht durchgehenden Bohrung (19) am Ende der Welle (7) besteht, in der der Zapfen (8) gleitet.

4. Winkelstück, gemäss Anforderung 3, das sich dadurch auszeichnet, dass die Achse der nicht durchgehenden Bohrung (19) parallel zur Achse der Welle (7) verläuft.

5. Winkelstück, gemäss Anforderung 3, das sich dadurch auszeichnet, dass die Achse der nicht durchgehenden Bohrung (19) schräg zur Achse der Welle (7) verläuft.

6. Winkelstück, gemäss Anforderung 3, das sich dadurch auszeichnet, dass in der nicht durchgehenden Bohrung (19) ein elastisches Organ (20) montiert ist, gegen dessen Wirkung die Rücklaufbewegung des Zapfens (8) erfolgt.

7. Winkelstück gemäss Anforderung 2, dessen Schieber drei Einschnitte aufweist, wobei der erste Einschnitt (6A) auf einer Mantellinie des Schiebers verläuft, der zweite Einschnitt (6B) senkrecht zu den Mantellinien eingearbeitet ist und der dritte Einschnitt (6C) aus einer nicht durchgehenden Bohrung in radialer Richtung besteht.

8. Winkelstück gemäss Anforderung 1, das sich dadurch auszeichnet, dass der Zapfen durch eine Kugel gebildet wird.

9. Winkelstück gemäss den Anforderungen 1, 2 und 3, das sich dadurch auszeichnet, dass die Einschnitte zur Aussenfläche des Schiebers hin aufgeweitet sind.

10. Winkelstück gemäss Anforderung 9, das sich dadurch auszeichnet, dass die Einschnitte einen trapezförmigen Querschnitt aufweisen.

11. Winkelstück gemäss den Anforderungen 1 und 2, das sich dadurch auszeichnet, dass ein Bedienknopf (14) des Schiebers aussen auf dem Körper (1) auf einer durch die Kappe (13) gehende Verlängerung (15) der Schieberachse befestigt ist.

12. Winkelstück gemäss den Anforderungen 1 und 2, das sich dadurch auszeichnet, dass es zwei Anschlagelemente besitzt, von denen eines (17) mit der aus Schieber, Werkzeug und Bedienknopf (14) bestehenden Einheit fest verbunden ist, während das andere Element (18) mit dem Körper (1) verbunden ist. Diese beiden Elemente kommen durch Drehung des Schiebers einander gegenüber zu stehen und begrenzen die axiale Verschiebung des Schiebers, falls dieser hin- und hergedreht wird.

13. Winkelstück gemäss Anforderung 12, das sich dadurch auszeichnet, dass das erste Anschlagelement am Bedienknopf befestigt ist und sich in Richtung der Kappe erstreckt, während das zweite Anschlagelement auf der Kappe vorsteht und sich wie ein Bogenstück abwickelt, das den gleichen Wert hat, wie der Bogen des Umfangs, der von einem Punkt auf dem Schieber durchlaufen wird, wenn letzterer hin- und herdreht.

Fig 1

EP 0 230 846 B1

Fig.2

Fig.4

Fig.5

Fig.3

Fig.6